# EUROPEAN PATENT APPLICATION

(11) **EP 4 769 816 A1**
(43) Date of publication of application: **01.07.2026**
(21) Application number: 24920692.1
(22) Date of filing: 21.10.2024
(51) Int. Cl.: H01M 50/538, H01M 50/107, H01M 50/528, H01M 50/627

(54) **CURRENT COLLECTING PLATE AND SECONDARY BATTERY INCLUDING SAME**

(30) Priority: 26.01.2024 KR 20240012557
(71) Applicant: LG ENERGY SOLUTION, LTD., Seoul 07335 (KR)
(72) Inventor: Ji, Sang Gu, Daejeon 34122 (KR); Kim, Won Joo, Daejeon 34122 (KR); Yoon, U Jin, Daejeon 34122 (KR); Kim, Youn Joong, Daejeon 34122 (KR); Kim, Jung Jin, Daejeon 34122 (KR); Baek, Min Gun, Daejeon 34122 (KR)
(74) Representative: Goddar, Heinz J.
(86) International application number: PCT/KR2024/015986
(87) International publication number: WO 2025/159276

(57) **Abstract**

A secondary battery according to an embodiment of the present invention comprises: a housing that includes a battery can forming an accommodation space therein and a top cap covering one open side of the battery can; an electrode assembly accommodated inside the battery can; and a current collecting plate electrically connected to at least one of the battery can or the top cap. The current collecting plate may include: a current collecting body that connects at least one of the battery can or the top cap to the electrode assembly; and a plating layer, having a greater electrical resistance than the current collecting body, on at least a portion of a welding surface of the current collecting body.

## Description

### TECHNICAL FIELD

### CROSS-REFERENCE TO RELATED APPLICATIONS

The present application claims priority to Korean Patent Application No. 10-2024-0012557 filed on January 26, 2024 in the Republic of Korea, the disclosure of which is incorporated herein by reference.

### TECHNICAL FIELD

The present disclosure relates to a current collector plate connected to a jellyroll-type electrode assembly, and a secondary battery including the same.

### BACKGROUND ART

In general, the types of secondary batteries include nickel cadmium batteries, nickel hydrogen batteries, lithium-ion batteries and lithium-ion polymer batteries. Secondary batteries are used in not only small products such as digital cameras, P-DVD, MP3P, mobile phones, PDA, portable game devices, power tools and E-bike, but also large products requiring high output such as electric vehicles or hybrid electric vehicles and energy storage systems that store surplus power or new renewable energy and energy storage systems for backup.

To manufacture a secondary battery, first, an electrode active material slurry is applied to a positive current collector and a negative current collector to manufacture a positive electrode and a negative electrode, and the positive electrode and the negative electrode are stacked on both sides of a separator to form an electrode assembly of a predetermined shape. Additionally, the electrode assembly is received in a battery case, followed by electrolyte injection and sealing.

Secondary batteries are classified into a pouch type and a can type according to the material of the case accommodating the electrode assembly. The pouch type accommodates the electrode assembly in the pouch made of a flexible polymer material. Additionally, the can type accommodates the electrode assembly in the case made of a metal or plastic material.

The can type, i.e., cylindrical secondary battery is manufactured by winding the positive electrode and the negative electrode with the separator interposed between them to manufacture the jellyroll-type electrode assembly, inserting the jellyroll-type electrode assembly into the battery can and welding.

In general, the jellyroll of the cylindrical secondary battery is manufactured by welding a conductive tab to an uncoated portion of the electrode, and an electric current generated from positive and negative plates of the jellyroll flows to positive and negative terminals, respectively. The cylindrical secondary battery uses a plurality of tabs to have a wide range of applications in the high output industry, and may be applied in the higher output industry by lowering the resistance of the battery.

However, there is difficulty in the process of designing the tabs as a part of the electrode. When electrically connecting the lead tabs to the uncoated portion of the positive electrode and the negative electrode and welding them, the electric current is focused on the lead tabs due to the small width of the lead tabs, resulting in excessive heat generation. To minimize this, the length and width of the tabs may be adjusted, but the area for coating the electrode slurry is reduced, resulting in lower energy density per mass of the battery. In addition, it is challenging to distribute steps in the jellyroll winding process.

Recently, to use batteries in the high-tech industry since the electric vehicle industry, battery performance of high energy density and high output is required. To meet these requirements, there is a need for battery design of not only higher energy density but also low resistance to withstand high current. To solve this, instead of pattern coating, stripe coating is applied to form the uncoated portion at the end of the electrode and the uncoated portion is notched to form a foil tab. This is applied in a manner that a current collector plate is additionally designed and welded to the foil tab, and the jellyroll welded to the current collector plate is welded to the inner surface of the battery can and a top cap. This allows the plurality of tabs to form the electrical passage to reduce the resistance of the battery, thereby achieving high output.

When applying the current collector plate, due to low weldability of the current collector plate, the current collector plate is easily separated from the battery can or the top cap. Additionally, by the current collector plate that covers the front surface of the electrode assembly, electrolyte wetting of the electrode assembly is poor in the subsequent process of filling the electrode assembly with the electrolyte solution.

As a result, there is a need for secondary batteries that havethe current collector plate structure for improving the weldability of the current collector plate and increasing the electrolyte wetting of the electrode assembly while applying the current collector plate.

### SUMMARY

### TECHNICAL PROBLEM

The present disclosure is directed to providing a current collector plate for enhancing the weld coupling by improving the structure and material and a secondary battery including the same.

### TECHNICAL SOLUTION

A secondary battery according to an embodiment of the present disclosure may include a housing including a battery can having an accommodation space inside and a top cap covering an open side of the battery can, an electrode assembly accommodated in the battery can, and a current collector plate electrically connected to at least one of the battery can or the top cap, wherein the current collector plate may include a current collector body connecting the at least one of the battery can or the top cap to the electrode assembly, and a plating layer having higher electrical resistivity than electrical resistivity of the current collector body on at least part of a weld surface of the current collector body.

The current collector body may include a central portion, and a plurality of wing portions formed along a circumference of the central portion and arranged at a predetermined interval.

The electrode assembly may have a center hole inside that runs therethrough along a length direction of the electrode assembly, the central portion may be formed facing the center hole, and the plurality of wing portions may be formed facing an end surface of the electrode assembly.

The wing portions may include a shape having a larger width as it goes radially outward from the central portion.

The wing portions may include a plurality of weld parts welded to at least one of the battery can or the electrode assembly.

The plurality of weld parts may be formed along a radial direction with respect to the central portion.

The plurality of weld parts may be formed within an area corresponding to 0.151 times to 0.383 times of an outer diameter of the electrode assembly in a radial direction with respect to a center of the current collector body.

The electrode assembly may have a plurality of overlapping folded electrode tabs at an end surface, and the plurality of weld parts may be formed at an overlapping part of ten or more electrode tabs.

The current collector plate may further include a plurality of protrusions protruding from a surface of the current collector body and facing an inner surface of the housing.

The plurality of protrusions may be formed on a surface of the central portion welded to the inner surface of the housing.

The current collector body may include a ring portion, a central portion located at an inner side of the ring portion, and a plurality of wing portions connecting the central portion to the ring portion and arranged at a predetermined interval in a circumferential direction of the central portion.

The current collector body may include at least one plate of a copper plate or a clad plate including stacked nickel and copper.

The plating layer may include nickel.

The clad plate may include a structure in which the copper is stacked between the nickel.

An angle formed by adjacent wing portions among the plurality of wing portions may range from 36° to 44°.

With respect to a center point of the central portion, when a radius of the central portion is R1, and a radius from the center point to an inner circumference of the ring portion is R2, R2/R1 may be from 2.138 to 2.613.

With respect to a center point of the central portion, when a radius to an inner circumference of the ring portion is R2, and a radius from the center point to an outer circumference of the ring portion is R3, R3/R2 may be from 1.069 to 1.306.

An outer diameter of the ring portion may be 1 mm to 2 mm less than an outer diameter of the electrode assembly.

A current collector plate according to an embodiment of the present disclosure may include a current collector body connecting at least one of a battery can or a top cap to an electrode assembly, and a plating layer having higher electrical resistivity than electrical resistivity of the current collector body on at least part of a weld surface of the current collector body.

### ADVANTAGEOUS EFFECTS

According to an exemplary embodiment of the present disclosure, it may be possible to enhance the weld coupling of the current collector plate to the battery can or the top cap by improving the structure and material of the current collector plate.

According to an exemplary embodiment of the present disclosure, it may be possible to enhance the electrolyte wetting of the electrode assembly by the structural features of the current collector plate.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a perspective view of a secondary battery according to an embodiment of the present disclosure.
FIG. 2 is a cut-away perspective view of a secondary battery according to an embodiment of the present disclosure.
FIG. 3 is a perspective view of an electrode assembly shown in FIG. 2.
FIG. 4 is a perspective view showing a battery can accommodating an electrode assembly including a first current collector plate and a second current collector plate welded according to an embodiment of the present disclosure.
FIG. 5 is a bottom view of a first current collector plate according to an embodiment of the present disclosure.
FIG. 6 is a plan view of a first current collector plate according to an embodiment of the present disclosure.
FIG. 7 is a bottom view of a first current collector plate according to another embodiment of the present disclosure.
FIG. 8 is a plan view of a first current collector plate according to another embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

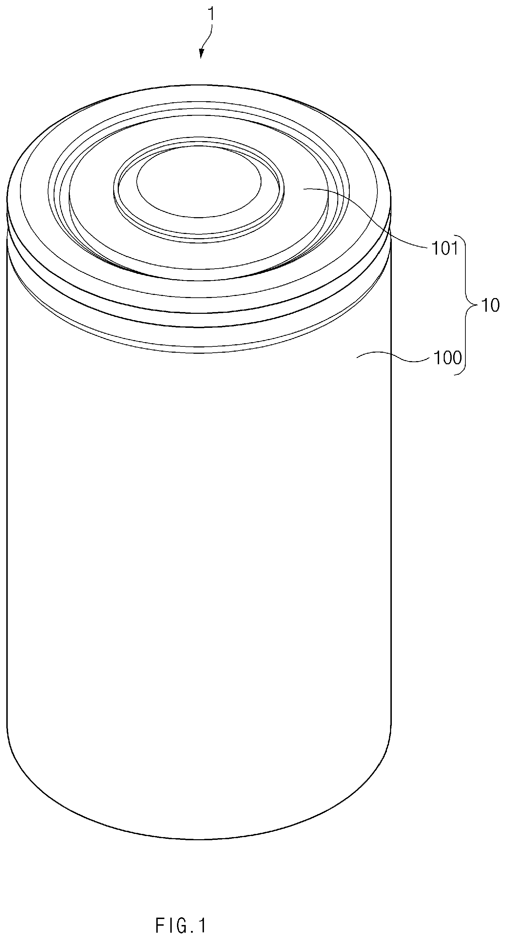

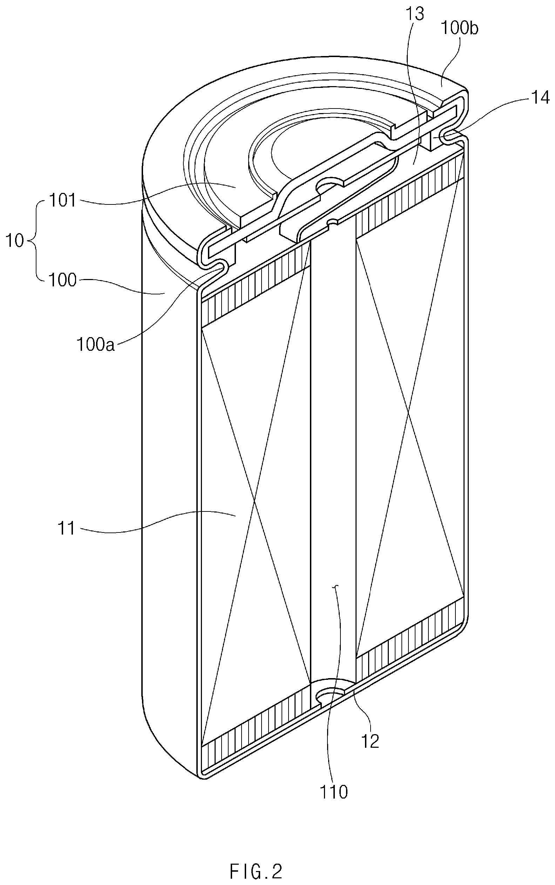

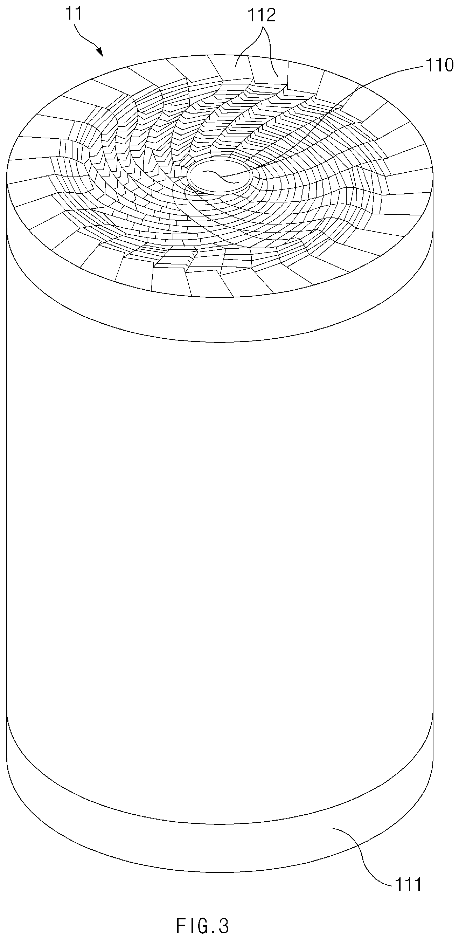

FIG. 1 is a perspective view of a secondary battery 1 according to an embodiment of the present disclosure, FIG. 2 is a cut-away perspective view of the secondary battery 1 according to an embodiment of the present disclosure, and FIG. 3 is a perspective view of an electrode assembly 11 shown in FIG. 2.

Referring to FIGS. 1 and 2, the secondary battery 1 according to an embodiment of the present disclosure may store electrical energy through chemical reaction of lithium ions, and output the stored electrical energy to the outside according to the need and design. For example, the secondary battery 1 may be manufactured by winding a sheet including a positive electrode, a negative electrode and a separator stacked in an alternating manner and putting it inside.

Specifically, the secondary battery 1 may include a housing 10, the electrode assembly 11 and current collector plates 12, 13.

The housing 10 may form the exterior of the secondary battery 1. For example, the housing 10 may include a cylindrical shape, i.e., a can shape to accommodate the electrode assembly 11 as described below and seal airtight. In addition, the housing 10 may include a battery can 100 having an accommodation space inside and a top cap 101 covering an open side of the battery can 100.

The battery can 100 may include a structure having the open side. For example, the battery can 100 may include the cylindrical shape having the top opening and the accommodation space inside. In this case, in the process of manufacturing the secondary battery 1, the jellyroll-type electrode assembly 11 may be inserted into the battery can 100 through the opening. Additionally, an electrolyte solution may be fed into the battery can 100 through the opening and the electrode assembly 11 may be filled with the electrolyte solution.

The top cap 101 may cover the open side of the battery can 100. That is, the top cap 101 may be coupled to the top of the battery can 100 to make the inside of the battery can 100 airtight. That is to say, the top cap 101 may function to prevent the electrode assembly 11 accommodated in the battery can 100 from slipping out.

The electrode assembly 11 may be formed by stacking a positive electrode, a negative electrode and a separator in an alternating manner and winding. That is, the electrode assembly 11 may be accommodated in the battery can 100 in jelly-roll style. In this case, the electrode assembly 11 may have a center hole 110 extended along the axial direction at the inner side.

Referring to FIG. 3, the electrode assembly 11 may have electrode tabs 111, 112 at two end portions in the axial direction. The electrode tabs 111, 112 may include the first electrode tab 111 and the second electrode tab 112 having different polarities. For example, the electrode assembly 11 may have the first electrode tab 111 at the lower end portion, and the second electrode tab 112 at the upper end portion.

In the positive electrode and the negative electrode of the electrode assembly 11, a region not coated with an electrode active material, i.e., an uncoated portion may be tailored into the electrode tabs 111, 112. The electrode tabs 111, 112 may have a foil flag shape, and may be folded toward the center hole 110. More specifically, the plurality of electrode tabs 111, 112 may be folded such that they overlap each other.

The current collector plates 12, 13 may be welded to the electrode tabs 111, 112. The current collector plates 12, 13 may include the first current collector plate 12 and the second current collector plate 13 welded to two end surfaces of the electrode assembly 11 in the axial direction. For example, the first current collector plate 12 may be welded to the first electrode tab 111, and the second current collector plate 13 may be welded to the second electrode tab 112. The first current collector plate 12 and the second current collector plate 13 may have different polarities.

As described above, the plurality of electrode tabs 111, 112 may be folded such that they overlap each other. Accordingly, the two end surfaces of the electrode assembly 11 may be generally flat in shape, and the current collector plates 12, 13 may be easily welded to the two end surfaces of the electrode assembly 11.

The current collector plates 12, 13 may be electrically connected to the battery can 100 or the top cap 101. The following description is made, taking as an example the first current collector plate 12 connected to the battery can 100, and the second current collector plate 13 connected to the top cap 101.

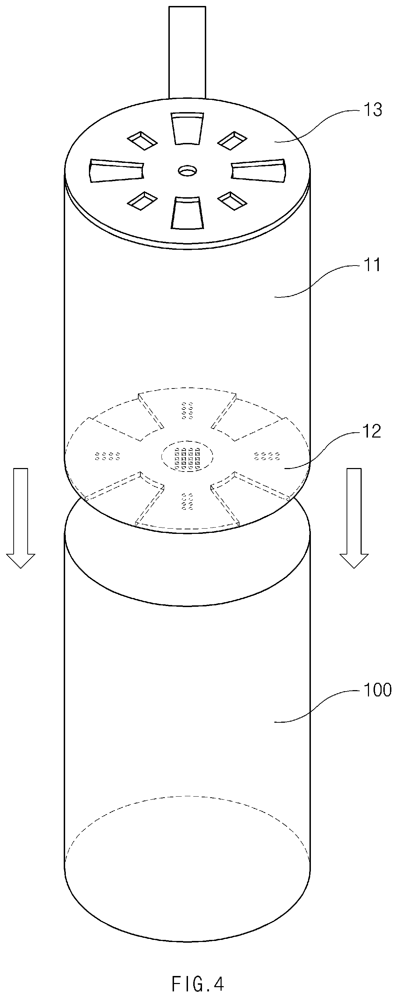

FIG. 4 is a perspective view showing the battery can 100 accommodating the electrode assembly 11 including the first current collector plate 12 and the second current collector plate 13 welded according to an embodiment of the present disclosure.

The first current collector plate 12 and the second current collector plate 13 may be coupled to the electrode tabs 111, 112 of the electrode assembly 11 through laser welding. That is to say, a high output laser beam may be irradiated onto the welded part between the first current collector plate 12 and the second current collector plate 13 and the electrode assembly 11. When the welded part is melted by the laser beam, the first current collector plate 12 and the second current collector plate 13 may be welded to the electrode tabs 111, 112 of the electrode assembly 11 by deep welding and high welding speed.

In the welded state to the electrode assembly 11, the current collector plates 12, 13 may be inserted into the battery can 100 together with the electrode assembly 11. Subsequently, the first current collector plate 12 may be welded to the battery can 100, and the second current collector plate 13 may be welded to the top cap 101. Accordingly, the battery can 100 and the top cap 101 may be electrically connected to the electrode assembly 11, and may have different polarities.

The first current collector plate 12 may be welded to the inner surface of the battery can 100, to be more specific, the bottom surface. In this case, the first current collector plate 12 and the battery can 100 may be welded to each other through resistance welding by a resistance rod (not shown). Specifically, in a state that the first current collector plate 12 contacts the inner surface of the battery can 100, the resistance rod inserted through the center hole 110 may apply pressure to the first current collector plate 12. Additionally, a high output current may flow in the resistance rod. By the current of the resistance rod, high heat by the resistance may be generated from the contact part of the first current collector plate 12 and the battery can 100, and the contact part of the first current collector plate 12 and the battery can 100 may be welded by the high heat.

The second current collector plate 13 may be welded to the top cap 101. For example, after the first current collector plate 12 is welded to the inner surface of the battery can 100, the top cap 101 may be coupled to the open side of the battery can 100, and the second current collector plate 13 may be welded to the lower surface the top cap 101.

Specifically, after the first current collector plate 12 is welded to the inner surface of the battery can 100, a beading portion 100a where the outer circumferential surface of the battery can 100 is internally beaded may be formed through a beading process. The beading portion 100a may overlap a part of the outer side of the electrode assembly 11 in the axial direction of the electrode assembly 11. Accordingly, the beading portion 100a may prevent the electrode assembly 11 accommodated in the battery can 100 from slipping out of the battery can 100. Additionally, the top cap 101 may be mounted on the beading portion 100a.

The secondary battery 1 may further include a gasket 14 between the battery can 100 and the top cap 101 to block the contact between the battery can 100 and the top cap 101. The gasket 14 may prevent shorts from occurring due to the contact between the battery can 100 and the top cap 101 having different polarities. That is, the gasket 14 may be formed along the inner side of the battery can 100 to insulate the battery can 100 from the top cap 101.

The gasket 14 may be coupled to the top cap 101 to cover the circumference portion of the top cap 101. The gasket 14 may have a closed loop shape extended along the circumference of the top cap 101.

The top cap 101 to which the gasket 14 is coupled may be mounted on the battery can 100, to be more specific, the beading portion 100a of the battery can 100. In this state, the top of the battery can 100 may be crimped inward to form a crimping portion 100b. The crimping portion 100b may be located on the beading portion 100a described above. By this process, the gasket 14 may be secured between the beading portion 100a and the crimping portion 100b of the battery can 100. Accordingly, the top cap 101 may be firmly coupled to the battery can 100, and the gasket 14 may prevent the contact between the battery can 100 and the top cap 101.

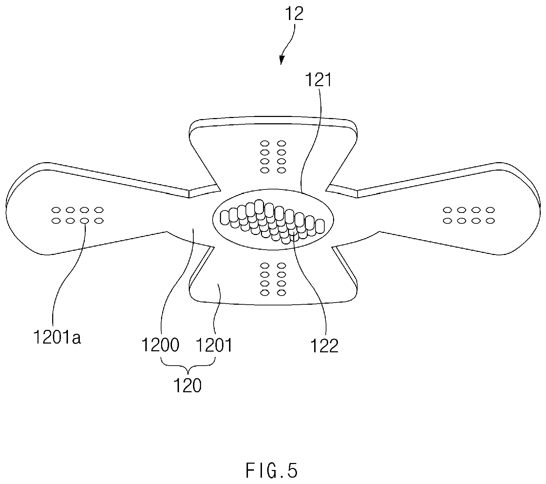

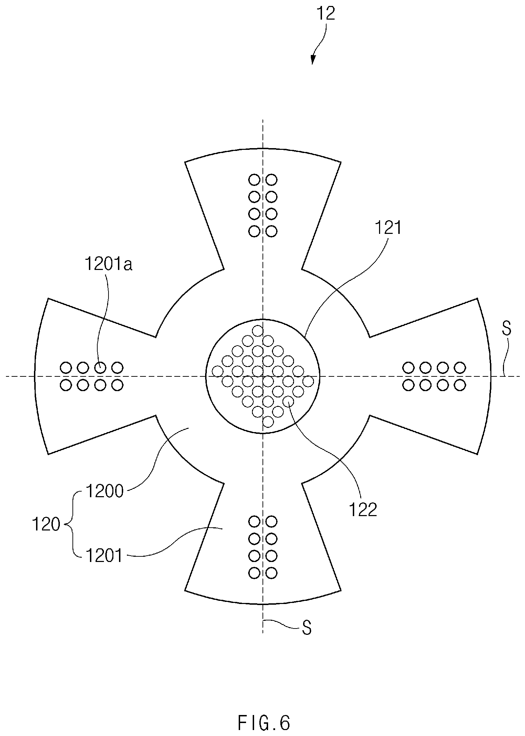

FIG. 5 is a bottom view of the first current collector plate 12 according to an embodiment of the present disclosure, and FIG. 6 is a plan view of the first current collector plate according to an embodiment of the present disclosure.

In the following description, the first current collector plate 12 will be referred to as the current collector plate 12, and the first electrode tab 111 will be referred to as the electrode tab 111. Unless otherwise expressly stated, those skilled in the art will obviously understand that the same description may be equally applied to the second current collector plate 13 and the second electrode tab 112.

Referring to FIGS. 5 and 6, the current collector plate 12 may include a current collector body 120 connecting at least one of the battery can 100 or the top cap 101 to the electrode assembly 11. The current collector body 120 may face one end surface of the electrode assembly 11 in the axial direction of the electrode assembly 11. That is, the current collector body 120 may cover one end surface of the electrode assembly 11. For example, the current collector body 120 may be welded to the electrode assembly 11 and the inner surface of the battery can 100, to connect the electrode assembly 11 to the battery can 100.

The current collector body 120 may include a central portion 1200 and a plurality of wing portions 1201.

The central portion 1200 may be located at the central part of the current collector body 120. In this case, the central portion 1200 may be located such that it corresponds to the central part of the end surface of the electrode assembly 11. For example, the central portion 1200 may face the center hole 110. That is to say, the central portion 1200 may cover one side of the center hole 110.

The central portion 1200 may be welded to the housing 10. More specifically, the central portion 1200 may be welded to the inner surface of the battery can 100 or the inner surface of the top cap 101.

The plurality of wing portions 1201 may be formed along the circumference of the central portion 1200. Additionally, the plurality of wing portions 1201 may be arranged at a predetermined interval. In this case, the plurality of wing portions 1201 may be formed facing the end surface of the electrode assembly 11 in the axial direction. That is, the plurality of wing portions 1201 may be formed facing the end surface of the electrode assembly 11. That is to say, the plurality of wing portions 1201 may be welded to one end surface of the electrode assembly 11 in the axial direction.

The wing portion 1201 may include a radial shape having a larger width as it goes outward from the central portion 1200. That is, the wing portion 1201 may include a shape that spreads out as it goes outward from the central portion 1200 along the radial direction with respect to the central portion 1200. By the radial wing portion 1201 structure, the current collector plate 12 may be stably coupled to the inner surface of the battery can 100 or the top cap 101, and does not unnecessarily occupy the space, thereby increasing electrolyte wetting of the electrode assembly 11.

For example, in a state that the electrode assembly 11 is accommodated in the battery can 100, the electrolyte solution may be injected into the battery can 100, and the electrode assembly 11 may be filled with the electrolyte solution and go through an activation process. In this process, the electrolyte solution may flow to the space between the plurality of wing portions 1201 and spread to the end surface of the electrode assembly 11, leading to enhanced wetting of the electrode assembly 11 with the electrolyte solution.

The wing portions 1201 may be welded to the electrode assembly 11. More specifically, the wing portions 1201 may be welded to the electrode tabs 111, 112 disposed at the end surface of the electrode assembly 11.

The wing portions 1201 may have a plurality of weld parts 1201a where welded to the electrode assembly 11. The weld parts 1201a may be marks formed by welding, for example, weld beads.

A variety of welding methods may be applied to the plurality of weld parts 1201a. For example, the plurality of weld parts 1201a may be welded to the battery can 100 or the electrode assembly 11 through at least one welding method of laser welding, ultrasonic welding or resistance welding.

In addition, the plurality of weld parts 1201a may be welded within a range in which the separator of the electrode assembly 11 is not damaged by high temperature. When the separator of the electrode assembly 11 is damaged, there is a hard short risk between the positive electrode and the negative electrode. To prevent the contact between the positive electrode and the negative electrode, the plurality of weld parts 1201a may be welded, taking into account the extent of damage of the separator while the secondary battery 1 is in use.

As described above, the electrode assembly 11 may have the plurality of overlapping folded electrode tabs 111 at the end surface to which the current collector plate 12 is welded. In relation to this, to prevent damage to the separator of the electrode assembly 11 by high temperature, the current collector plate 12 may be welded to the overlapping part of the plurality of electrode tabs 111. Preferably, the current collector plate 12 may be welded to the overlapping part of ten or more electrode tabs 111. That is, the plurality of weld parts 1201a may be welded to the overlapping part of ten or more electrode tabs 111.

Accordingly, the plurality of electrode tabs 111 may prevent the separator of the electrode assembly 11 from getting damaged by high temperature generated in the welding process.

For example, the plurality of weld parts 1201a may be formed along the radial direction with respect to the central portion 1200. Specifically, referring to FIG. 6, the plurality of weld parts 1201a may be formed along a reference line S that passes across the center of the current collector plate 12. For example, the reference line S may include a vertical line and a horizontal line that pass through the center of the current collector plate 12, and the vertical line and the horizontal line may be a line that passes across the center of the wing portions 1201. In this case, the plurality of weld parts 1201a may be formed along the vertical line and the horizontal line.

The plurality of weld parts 1201a may form a plurality of columns along the reference line S. For example, the plurality of weld parts 1201a may be arranged in a line along the reference line S, and the line in which the plurality of weld parts 1201a is arranged may include a plurality of lines. Preferably, the plurality of weld parts 1201a may be arranged in two lines such that they are disposed at two sides of the reference line S, respectively. However, the plurality of weld parts 1201a is not necessarily arranged in two lines, and may be arranged in a plurality of lines or in a radial shape according to the need and design.

According to the structure and characteristics of the plurality of weld parts 1201a, it may be possible to increase the tensile strength of the current collector plate 12, thereby further improving the weld quality. That is to say, additionally, by these characteristics, more various welding methods may be applied to the current collector plate 12.

In addition, the current collector plate 12 may further include a plurality of protrusions 122 on one surface of the current collector body 120 facing the inner surface of the housing 10. For example, the plurality of protrusions 122 may be formed on one surface of the central portion 1200 welded with the inner surface of the housing 10. For example, the plurality of protrusions 122 may be protruded from the central portion 1200 such that they face the bottom surface of the battery can 100. The plurality of protrusions 122 may have an embossed shape.

The plurality of protrusions 122 may be a structure formed in the current collector plate 12 before the current collector plate 12 and the inner surface of the battery can 100 are welded. The plurality of protrusions 122 may be a part that is melted and welded in contact with the inner surface of the battery can 100.

Additionally, the end of the plurality of protrusions 122 may have a smaller cross-sectional area as it is closer to the inner surface of the housing 10. For example, the end of the plurality of protrusions 122 may have a gently curved shape. That is, the end of the plurality of protrusions 122 may include a dull surface.

In the resistance welding process, the current of the resistance rod may flow in the plurality of protrusions 122 having a small cross-sectional area, causing over-current, and the plurality of protrusions 122 where the over-current occurred may be melted more effectively by the high temperature and welded to the inner surface of the battery can 100. That is, while the current of the resistance rod flows from the current collector body 120 to the plurality of protrusions 122, the current may be focused more intensively to generate a larger amount of heat, thereby enhancing the welding effect for the same current output intensity and output time.

The current collector plate 12 may further include a plating layer 121 having higher electrical resistivity than the electrical resistivity of the current collector body 120 on at least part of the weld surface of the current collector body 120. For example, the current collector body 120 may include at least one plate of a copper plate or a clad plate including nickel and copper stacked. The clad plate may include a structure in which copper is stacked between nickel. The plating layer 121 may include nickel. The plating layer 121 may be a plate made of nickel.

As the plating layer 121 having higher electrical resistivity than the current collector body 120 is formed at a part of the weld surface of the current collector body 120, more heat may be generated on the weld surface and the weld surface may be melted, thereby further enhancing the weld coupling of the current collector plate 12 and the battery can 100.

Additionally, the plating layer 121 may be formed in a part of the current collector body 120 having the plurality of protrusions 122. However, this is an embodiment of the plating layer 121, and to enhance the weld coupling, various types of plating layers 121 may be formed. For example, the plating layer 121 may be formed in a part of the wing portions 1201 having the plurality of weld parts 1201a. Alternatively, the plating layer 121 may be formed on the outer surface of the plurality of protrusions 122. Besides, when the current collector plate 12 and the electrode assembly 11 are coupled by welding, the plating layer 121 may be formed in a part of the current collector body 120 facing the electrode assembly 11. Finally, the plating layer 121 may be formed on the entire lower surface of the current collector plate 12.

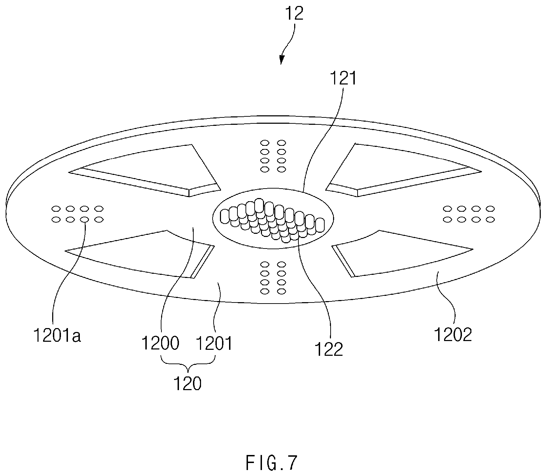

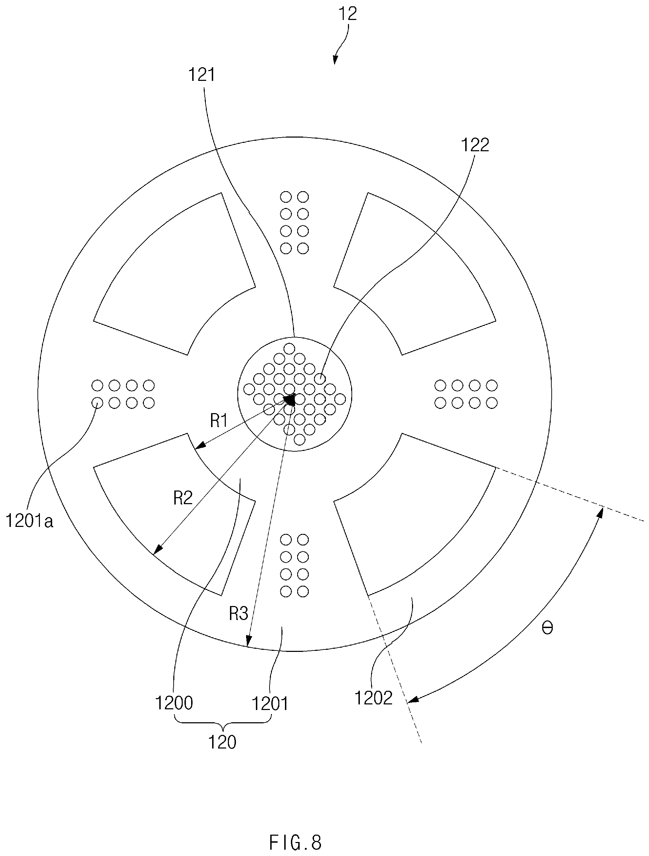

FIG. 7 is a bottom view of the first current collector plate 12 according to another embodiment of the present disclosure, and FIG. 8 is a plan view of the first current collector plate according to another embodiment of the present disclosure.

Hereinafter, the structure of the current collector plate 12 according to another embodiment of the present disclosure will be described. The overlapping description with the above-described structure of the first current collector plate 12 is omitted.

Referring to FIGS. 7 and 8, the current collector plate 12 according to another embodiment of the present disclosure may include the current collector body 120 connecting at least one of the battery can 100 or the top cap 101 to the electrode assembly 11, and the current collector body 120 may include a ring portion 1202, the central portion 1200 and the plurality of wing portions 1201.

The ring portion 1202 may be a part that forms the circumference of the current collector plate 12. That is, in a state that the current collector body 120 faces the end surface of the electrode assembly 11, the ring portion 1202 may be a part that is formed along the circumference of the end surface of the electrode assembly 11. For example, the ring portion 1202 may have a closed loop shape.

The ring portion 1202 may be formed along the inner circumference of the battery can 100. The ring portion 1202 may be formed along the circumference of the end surface of the electrode assembly 11.

Specifically, the ring portion 1202 may include a circular ring shape. For example, the battery can 100 may include the cylindrical shape, and the ring portion 1202 may include the circular ring shape that conforms to the shape of the inner circumference of the battery can 100. That is to say, the ring portion 1202 may include the circular ring shape formed along the circumference of the jellyroll-type electrode assembly 11.

The central portion 1200 may be located at the inner side of the ring portion 1202, and the plurality of wing portions 1201 may connect the central portion 1200 to the ring portion 1202. The plurality of wing portions 1201 may be arranged in a predetermined interval in the circumferential direction of the central portion 1200. The interval between the plurality of wing portions 1201 may serve as an opening through which the electrolyte solution can pass.

The ring portion 1202 and the central portion 1200 may be integrally connected with the plurality of wing portions 1201.

According to this structure of the ring portion 1202, when the current collector body 120 is welded to the electrode assembly 11, the current collector body 120 may be welded in a state that it is further aligned to the center of the electrode assembly 11. That is to say, as the current collector plate 12 includes the circular ring-shaped ring portion 1202, concentricity of the electrode assembly 11 and concentricity of the current collector body 120 may match more precisely. Accordingly, welding precision of the current collector body 120 may be further enhanced, and the current collector plate 12 may be coupled to the battery can 100 more stably.

The outer diameter of the ring portion 1202 may be smaller than the outer diameter of the electrode assembly 11. This may be to ensure a margin of safety in concentricity between the current collector plate 12 and the electrode assembly 11. Preferably, the outer diameter of the ring portion 1202 may be 1 mm to 2 mm smaller than the outer diameter of the electrode assembly 11. Accordingly, even though the concentricity of the current collector plate 12 and the electrode assembly 11 does not completely match, the ring portion 1202 may not be further protruded outwards than the electrode assembly 11. In the case where a difference between the outer diameter of the ring portion 1202 and the outer diameter of the electrode assembly 11 is smaller than 1 mm, there is a risk that a part of the ring portion 1202 may be further protruded outwards than the electrode assembly 11, and in this case, defects may occur when inserting the electrode assembly 11 to which the current collector plate 12 is welded into the battery can 100. On the contrary, in the case where the difference between the outer diameter of the ring portion 1202 and the outer diameter of the electrode assembly 11 is larger than 2 mm, the size of the current collector 11 may be unnecessarily reduced, and the resistance of the current collector 11 may increase.

The weld parts 1201a of the current collector plate 12 may be formed within an area corresponding to 0.151 times to 0.383 times of the outer diameter of the electrode assembly 11 in the radial direction with respect to the center of the current collector body 120. For example, when the outer diameter of the electrode assembly 11 is approximately 20.5 mm, the weld parts 1201a of the current collector plate 12 may be formed within an area corresponding to 3.10 mm to 7.85 mm in the radial direction with respect to the center of the current collector body 120.

By this restriction, the weld parts 1201a of the current collector plate 12 may be welded to the overlapping part of the plurality of electrode tabs 111, preferably ten or more electrode tabs 111 on the end surface of the electrode assembly 11. As described above, the plurality of electrode tabs 111 may prevent the separator of the electrode assembly 11 from getting damaged by high temperature generated in the welding process.

In the related experimental example, simulation confirmed that in the case where the outer diameter of the electrode assembly 11 is 20.64 mm, when the weld parts 1201a of the current collector plate 12 are outside of an area corresponding to approximately 3.18 mm to 7.66 mm in the radial direction from the center of the current collector body 120, they are welded to the overlapping part of less than ten electrode tabs 111 of the electrode assembly 11.

The weld parts 1201a of the current collector plate 12 may be formed with the margin of 1 mm or more from the opening formed between the plurality of wing portions 1201. That is, the distance between the opening and the weld parts 1201a may be 1 mm or more. In the case where the distance is less than 1 mm, there is a risk that the electrode assembly 11 may be damaged by the interference of the laser used to weld with the opening.

An angle θ formed by the adjacent wing portions 1201 among the plurality of wing portions 1201 may range from 36° to 44°. That is to say, with respect to the center of the current collector body 120, the angle θ formed by the adjacent wing portions 1201 among the plurality of wing portions 1201 may range from 36° to 44°.

When the angle θ formed by the adjacent wing portions 1201 is less than 36°, the opening formed between the plurality of wing portions 1201 may be overly small. Accordingly, the electrolyte wetting of the electrode assembly 11 may decline, the volume and weight of the wing portions 1201 may increase, the energy density of the secondary battery 1 may decrease, and the manufacturing cost of the secondary battery 1 may increase.

On the contrary, when the angle θ formed by the adjacent wing portions 1201 is higher than 44°, the area of the wing portions 1201 may become narrower, the weldability of the current collector body 120 may decline, and the risk of damage to the wing portions 1201 may increase.

With respect to the center of the current collector body 120, i.e., the center point of the central portion 1200, when the radius of the central portion 1200 is R1, and the radius from the center point to the inner circumference of the ring portion 1202 is R2, R2/R1 may be from 2.138 to 2.613.

When R2/R1 is less than 2.138, the distance between the central portion 1200 and the ring portion 1202 is significantly reduced, and in the activation process of the electrode assembly 11, the electrolyte wetting of the electrode assembly 11 may decline. On the contrary, when R2/R1 is larger than 2.613, the distance between the central portion 1200 and the ring portion 1202 is significantly increased, and the structural stability of the current collector body 120 declines, and even though the current collector body 120 is welded, the weld coupling may be lowered.

Additionally, it was confirmed through the experimental example that when R2/R1 is in a range between 2.138 and 2.613, the weld parts 1201a of the current collector plate 12 may be welded to the overlapping part of the plurality of electrode tabs 111, preferably ten or more electrode tabs 111 on the end surface of the electrode assembly 11.

More specifically, in the experimental example, the current collector plate 12 having R1 of 3.5 mm, R2 of 7.5 mm and R3 of 9.5 mm was welded to the electrode assembly 11. More specifically, in a state that the pressure of 40 N is applied to the 0.1 mm thick current collector plate 12 against the electrode assembly 11, welding was performed by irradiating 5.5 V laser for 3.2 ms. As a result of welding two times, the tensile strength of the weld part was 3.53 kgf/cm² and 2.66 kgf/cm² when measured, and was found in the normal range.

Meanwhile, when the radius from the center point of the central portion 1200 to the inner circumference of the ring portion 1202 is R2, and the radius from the center point to the outer circumference of the ring portion 1202 is R3, R3/R2 may be from 1.069 to 1.306.

When R3/R2 is less than 1.069, the width of the ring portion 1202 is overly small, and the durability of the ring portion 1202 is low, causing damage to the ring portion 1202 during the welding of the current collector body 120 or while the secondary battery 1 is in use. On the contrary, when R3/R2 is larger than 1.306, the width of the ring portion 1202 is significantly large, and the ring portion 1202 unnecessarily occupies the internal space of the battery can 100, resulting in lower energy density of the secondary battery 1, a narrower space between the central portion 1200 and the ring portion 1202, and poor electrolyte wetting of the electrode assembly 11.

Additionally, it was confirmed through the experimental example that when R3/R2 is in a range between 1.069 and 1.306, the current collector plate 12 is smoothly formed without damage to the ring portion 1202, and concentricity alignment and good electrolyte wetting of the electrode assembly 11 is achieved.

More specifically, in the experimental example, 6.3g of the electrolyte solution was injected into the housing 10 accommodating the electrode assembly 11 to which the current collector plate 12 having R1 of 3.5 mm, R2 of 7.5 mm and R3 of 9.5 mm is welded, for 610 seconds according to a predetermined process. In this instance, the vacuum pressure of a vacuum chamber used to inject the electrolyte solution was set to -0.9 kPa. The process of injecting the electrolyte solution into the cylindrical battery is well known and its description is omitted. As a result, it was confirmed that each electrode of the electrode assembly 11 is sufficiently filled by the electrolyte solution.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

**[List of Reference Numerals]**

| | | | |
|---|---|---|---|
| 1: | Secondary battery | 10: | Housing |
| 11: | Electrode assembly | 12: | First current collector plate |
| 13: | Second current collector plate | 14: | Gasket |
| 100: | Battery can | 101: | Top cap |
| 120: | Current collector body | 121: | Plating layer |
| 122: | Protrusions | 1200: | Central portion |
| 1201: | Wing portion | 1202: | Ring portion |
| 110: | Injection hole | 1201a: | Weld parts |

## Claims

1. A secondary battery comprising:
a housing including a battery can having an accommodation space inside and a top cap covering an open side of the battery can;
an electrode assembly accommodated in the battery can; and
a current collector plate electrically connected to at least one of the battery can or the top cap,
wherein the current collector plate includes:
a current collector body connecting the at least one of the battery can or the top cap to the electrode assembly; and
a plating layer having higher electrical resistivity than electrical resistivity of the current collector body on at least part of a weld surface of the current collector body.

2. The secondary battery according to claim 1,
wherein the current collector body includes:
a central portion; and
a plurality of wing portions formed along a circumference of the central portion and arranged at a predetermined interval.

3. The secondary battery according to claim 2,
wherein the electrode assembly has a center hole inside that runs therethrough along a length direction of the electrode assembly, and
wherein the central portion is formed facing the center hole, and the plurality of wing portions is formed facing an end surface of the electrode assembly.

4. The secondary battery according to claim 3,
wherein the wing portions include a shape having a larger width as it goes radially outward from the central portion.

5. The secondary battery according to claim 2,
wherein the wing portions include a plurality of weld parts welded to at least one of the battery can or the electrode assembly.

6. The secondary battery according to claim 5,
wherein the plurality of weld parts is formed along a radial direction with respect to the central portion.

7. The secondary battery according to claim 5,
wherein the plurality of weld parts is formed within an area corresponding to 0.151 times to 0.383 times of an outer diameter of the electrode assembly in a radial direction with respect to a center of the current collector body.

8. The secondary battery according to claim 5,
wherein the electrode assembly has a plurality of overlapping folded electrode tabs at an end surface, and
wherein the plurality of weld parts is formed at an overlapping part of ten or more electrode tabs.

9. The secondary battery according to claim 2,
wherein the current collector plate further includes:
a plurality of protrusions protruding from a surface of the current collector body and facing an inner surface of the housing.

10. The secondary battery according to claim 9,
wherein the plurality of protrusions is formed on a surface of the central portion welded to the inner surface of the housing.

11. The secondary battery according to claim 1,
wherein the current collector body includes:
a ring portion;
a central portion located at an inner side of the ring portion; and
a plurality of wing portions connecting the central portion to the ring portion and arranged at a predetermined interval in a circumferential direction of the central portion.

12. The secondary battery according to claim 1,
wherein the current collector body includes at least one plate of a copper plate or a clad plate including stacked nickel and copper.

13. The secondary battery according to claim 12,
wherein the plating layer includes nickel.

14. The secondary battery according to claim 12,
wherein the clad plate includes a structure in which the copper is stacked between the nickel.

15. The secondary battery according to claim 2 or 11,
wherein an angle formed by adjacent wing portions among the plurality of wing portions ranges from 36° to 44°.

16. The secondary battery according to claim 11,
wherein with respect to a center point of the central portion, when a radius of the central portion is R1, and a radius from the center point to an inner circumference of the ring portion is R2, R2/R1 is from 2.138 to 2.613.

17. The secondary battery according to claim 11,
wherein with respect to a center point of the central portion, when a radius to an inner circumference of the ring portion is R2, and a radius from the center point to an outer circumference of the ring portion is R3, R3/R2 is from 1.069 to 1.306.

18. The secondary battery according to claim 11,
wherein an outer diameter of the ring portion is 1 mm to 2 mm less than an outer diameter of the electrode assembly.

19. A current collector plate comprising:
a current collector body connecting at least one of a battery can or a top cap to an electrode assembly; and
a plating layer having higher electrical resistivity than electrical resistivity of the current collector body on at least part of a weld surface of the current collector body.
